# EUROPEAN PATENT APPLICATION

(11) **EP 4 818 896 A1**
(43) Date of publication of application: **07.10.2026**
(21) Application number: 24918290.8
(22) Date of filing: 17.12.2024
(51) Int. Cl.: G06F 9/455

(54) **METHOD AND APPARATUS FOR REPAIRING VIRTUAL MACHINE IN CLOUD ENVIRONMENT, AND ELECTRONIC DEVICE**

(30) Priority: 18.01.2024 CN 202410073153
(71) Applicant: Tencent Technology (Shenzhen) Company Limited, Shenzhen, Guangdong 518057 (CN)
(72) Inventor: GOU, Longhui, Shenzhen, Guangdong 518057 (CN); SUN, Zixiang, Shenzhen, Guangdong 518057 (CN); TANG, Qian, Shenzhen, Guangdong 518057 (CN); LI, Li, Shenzhen, Guangdong 518057 (CN); ZENG, Junliang, Shenzhen, Guangdong 518057 (CN); LI, Bin, Shenzhen, Guangdong 518057 (CN); YAO, Kaijian, Shenzhen, Guangdong 518057 (CN)
(74) Representative: Gunzelmann, Rainer
(86) International application number: PCT/CN2024/139826
(87) International publication number: WO 2025/152682

(57) **Abstract**

the embodiments of the present application relate to the technical field of virtual machines. Provided are a method and apparatus for repairing a virtual machine in a cloud environment, and an electronic device and a storage medium. The method comprises: receiving a first request, which is sent by a console, wherein the first request is used for requesting the repair of a target virtual machine, and the first request comprises a virtual machine identifier of the target virtual machine; querying a mirror database for a target mirror identifier of a pre-made live CD mirror corresponding to the virtual machine identifier; and creating a target cloud block storage, which is used for storing the live CD mirror corresponding to the target virtual machine identifier, and mounting the target cloud block storage to a host machine, in which the target virtual machine is located, such that the host machine downloads the live CD mirror corresponding to the target mirror identifier from a mirror storage warehouse to the target cloud block storage, mounts the target cloud block storage to the target virtual machine, and starts the target virtual machine by means of the target cloud block storage. By means of the embodiments of the present application, a target cloud block storage, in which a live CD mirror is loaded, is mounted to a target virtual machine, thereby realizing the start of the virtual machine which has a system fault.

## Description

### RELATED APPLICATION

This application claims priority to Chinese Patent Application No. 202410073153.2, filed with the China National Intellectual Property Administration (CNIPA) on January 18, 2024 and entitled "METHOD AND APPARATUS FOR REPAIRING VIRTUAL MACHINE IN CLOUD ENVIRONMENT, AND ELECTRONIC DEVICE", which is incorporated herein by reference in its entirety.

### FIELD OF THE TECHNOLOGY

This disclosure relates to the field of computer technology, and in particular, to a method and apparatus for repairing a virtual machine in a cloud environment, an electronic device, and a computer-readable storage medium.

### BACKGROUND

With the development of cloud computing, the virtual machine technology in cloud environments has been increasingly widely applied and plays an important role in various fields. During the use of virtual machines, various failure problems may occur, which can prevent the virtual machines from operating normally. Thus, the virtual machines need to be repaired. For problems such as forgotten passwords and hard disk data corruption, traditional repair for a virtual machine in a cloud environment typically requires booting up the virtual machine to enter a single-user mode and complete the repair. However, when problems like missing boot-up loader files, missing critical system files, and damaged or missing dynamic library files occur on the virtual machine, the virtual machine cannot be booted up by itself, and thus cannot enter the single-user mode to fix the problems.

### SUMMARY

Embodiments of this disclosure include a method for repairing a virtual machine in a cloud environment, a terminal, a server, an electronic device, a storage medium, and a computer program product, to resolve at least some of problems in the related art.

An embodiment of this disclosure provides a method for repairing a virtual machine in a cloud environment, applied to a server, the method including: receiving, from a console, a first request for requesting a repair of a target virtual machine, the first request including a virtual machine identifier of the target virtual machine; querying an image database for a target image identifier of a pre-made live compact disc (CD) image corresponding to the virtual machine identifier; and creating a target cloud block storage for storing the live CD image corresponding to the target image identifier, and attaching the target cloud block storage to a host machine corresponding to the target virtual machine, , the target cloud block storage is used for storing the live CD image downloaded by the host machine from an image repository to the target cloud block storage and being attached to the target virtual machine for booting up the target virtual machine via the target cloud block storage.

An embodiment of this disclosure further provides a method for repairing a virtual machine in a cloud environment, applied to a host machine, the method including: downloading a pre-made live CD image corresponding to a target image identifier from an image repository to a target cloud block storage; and attaching the target cloud block storage to a target virtual machine having a system failure, and booting up the target virtual machine via the target cloud block storage; where the target cloud block storage is created by a server to store the live CD image to be attached to the host machine; the target image identifier is obtained by the server by querying an image database using a virtual machine identifier of the target virtual machine which is included in a first request that is transmitted by a console to the server for requesting a repair of the target virtual machine.

An embodiment of this disclosure further provides an apparatus for repairing a virtual machine in a cloud environment, applied to a server, the apparatus including: a receiving module configured to receive a first request transmitted by a console for requesting a repair of a target virtual machine, the first request including a virtual machine identifier of the target virtual machine; a query module configured to query an image database for a target image identifier of a pre-made live CD image corresponding to the virtual machine identifier; and a creation module configured to create a target cloud block storage for storing the live CD image and attach the target cloud block storage to a host machine corresponding to the target virtual machine, the target cloud block storage is used for storing the live CD image downloaded by the host machine from an image repository and being attached to the target virtual machine for booting up the target virtual machine via the target cloud block storage.

An embodiment of this disclosure further provides an apparatus for repairing a virtual machine in a cloud environment, applied to a host machine, the apparatus including: a download module configured to download a live CD image corresponding to a target image identifier from an image repository to a target cloud block storage; and a boot-up module configured to attach the target cloud block storage to a target virtual machine having a system failure, and boot up the target virtual machine via the target cloud block storage; where the target cloud block storage is created by a server for storing the live CD image to be attached to the host machine; the target image identifier is obtained by the server by querying an image database using a virtual machine identifier of the target virtual machine which is included in a first request that is transmitted by a console to the server for requesting a repair of the target virtual machine.

An embodiment of this disclosure provides an electronic device, including a memory, a processor, and a computer program stored on the memory, the processor being configured to execute the computer program to implement the operations of the method for repairing a virtual machine in a cloud environment according to the embodiments.

An embodiment of this disclosure further provides a computer-readable storage medium, having a computer program stored thereon, the computer program, when executed by a processor, implementing the operations of the method for repairing a virtual machine in a cloud environment according to the embodiments.

An embodiment of this disclosure further provides a computer program product, including a computer program, the computer program, when executed by a processor, implementing the operations of the method for repairing a virtual machine in a cloud environment according to the embodiments.

According to embodiments of this disclosure, by creating the target cloud block storage for storing the live CD image corresponding to the target image identifier, a correspondence is established among the target image identifier, the live CD image, and the target cloud block storage, so that the target cloud block storage can meet the requirement for loading the live CD image, thereby preparing for the host machine to download the live CD image from the image repository to the target cloud block storage. The target cloud block storage is attached to the host machine, such that the host machine downloads the live CD image to the target cloud block storage. Moreover, the target cloud block storage in which the live CD image is loaded is attached to the target virtual machine, such that the target virtual machine is booted up via the live CD image on the target cloud block storage, thereby booting up the target virtual machine and enabling the repairing operation on the target virtual machine.

### BRIEF DESCRIPTION OF THE DRAWINGS

To describe the technical solutions of embodiments of this disclosure more clearly, the following briefly describes the accompanying drawings required for describing the embodiments of this application.
FIG. 1 is a schematic diagram of a system structure of a method for repairing a virtual machine in a cloud environment according to an embodiment of this disclosure.
FIG. 2a is a flowchart of a method for repairing a virtual machine in a cloud environment according to an embodiment of this disclosure.
FIG. 2b is a flowchart of another method for repairing a virtual machine in a cloud environment according to an embodiment of this disclosure.
FIG. 2c is a flowchart of making a live CD image according to an embodiment of this disclosure.
FIG. 3 is a schematic diagram of a host machine identifier list according to an embodiment of this disclosure.
FIG. 4 is a flowchart of another method for repairing a virtual machine in a cloud environment according to an embodiment of this disclosure.
FIG. 5a is a flowchart of detecting a target virtual machine according to an embodiment of this disclosure.
FIG. 5b is a flowchart of an execution process of an access module in a method for repairing a virtual machine in a cloud environment according to an embodiment of this disclosure.
FIG. 6a is a flowchart of stopping repairing a target virtual machine according to an embodiment of this disclosure.
FIG. 6b is another flowchart of stopping repairing a target virtual machine according to an embodiment of this disclosure.
FIG. 6c is a flowchart of an execution process of an access module when stopping repairing a target virtual machine according to an embodiment of this disclosure.
FIG. 7 is a flowchart of a method for repairing a virtual machine in a cloud environment according to an embodiment of this disclosure.
FIG. 8 is a flowchart of another method for repairing a virtual machine in a cloud environment according to an embodiment of this disclosure.
FIG. 9 is a flowchart of stopping repairing a target virtual machine according to an embodiment of this disclosure.
FIG. 10 is a flowchart of another method for repairing a virtual machine in a cloud environment according to an embodiment of this disclosure.
FIG. 11 is a flowchart of another method for repairing a virtual machine in a cloud environment according to an embodiment of this disclosure.
FIG. 12 is a schematic structural diagram of an apparatus for repairing a virtual machine in a cloud environment according to an embodiment of this disclosure.
FIG. 13 is a schematic structural diagram of an apparatus for repairing a virtual machine in a cloud environment according to an embodiment of this disclosure.
FIG. 14 is a schematic structural diagram of an electronic device for repairing a virtual machine in a cloud environment according to an embodiment of this disclosure.

### DETAILED DESCRIPTION

The following describes technical solutions in embodiments of this disclosure with reference to the accompanying drawings. The implementations described below with reference to the accompanying drawings are exemplary descriptions for explaining the technical solution of the embodiments of this disclosure, and do not constitute a limitation to the technical solutions in the embodiments of this disclosure.

A person skilled in the art can understand that, unless otherwise stated, the singular forms "a", "an", "said" and "the" used herein may alternatively include plural forms. The terms "include" and "comprise" used in the embodiments of this disclosure mean that the corresponding features may be implemented as the presented features, information, data, steps, operations, elements, and/or components, but do not exclude implementation as other features, information, data, steps, operations, elements, components, and/or combinations thereof, and the like supported in this art. When an element is referred to as being "connected" or "coupled" to another element, the element may be directly connected or coupled to the another element, or a connection relationship is established between the element and the another element via an intermediate element. In addition, "connected" or "coupled" used herein may include wireless connection or coupling. The term "and/or" used herein indicates at least one of items defined by the term. For example, "A and/or B" may be implemented as "A", "B", or "A and B".

In the embodiments of this disclosure, the term "module" or "unit" refers to a computer program with a preset function or a part of the computer program and works, together with other related parts, to implement a preset target, and may be completely or partially implemented by using software, hardware (for example, a processing circuit or a memory) or a combination thereof. Similarly, one processor (or a plurality of processors or memories) may be configured to realize one or more modules or units. In addition, each module or unit may be a part of an overall module or unit including the module or unit function.

To make the objective, technical solutions, and advantages of this application clearer, the implementations of this application are described in further detail below with reference to the drawings.

Examples of terms involved in the aspects of the disclosure are briefly introduced and explained.

Cloud technology can refer to a hosting technology that unifies a series of resources such as hardware, software, and networks in a wide area network or a local area network to implement computing, storage, processing, and sharing of data.

A virtual machine (VM) can refer to a computer system simulated by software, and may run a plurality of operating systems and application programs on a physical computer. A virtual machine may abstract resources such as a processor, an internal memory, and a storage of a physical computer, and a network into a plurality of virtual resources. Each virtual machine may access and use these virtual resources. The working principle of the virtual machine involves creating a plurality of virtual computers on the physical computer via virtualization software (also referred to as Hypervisor). Each virtual computer may run a different operating system and application program. The virtualization software abstracts resources such as the processor, the internal memory, and the storage of the physical computer, and the network into a plurality of virtual resources. Each virtual computer may access and use these virtual resources.

A host machine can refer to a dedicated physical server on which a virtualized environment is deployed. A user can use the resources of the entire physical server alone. This physical server is physically isolated from servers of other tenants. After purchasing a host machine, the user may use the host machine via a cloud server allocated on the host machine. It supports the user to autonomously plan use of physical machine resources, and customize configuration of a virtual machine on the host machine.

A console, which is provided in a cloud environment, can refer to a device with a user interface that is based on a web page or an application program, and is configured to manage cloud computing resources. By using the console, various cloud services such as virtual machines, storage, networks, and databases may be created, configured, and managed, and operating states and performance thereof may be obtained. The console typically provides an intuitive operation interface, enabling a user to easily perform various operations, such as creating, deleting, or adjusting a resource, and viewing data.

An operating system (OS) can refer to a program that manages hardware and software resources, and handles affairs such as managing and configuring an internal memory, prioritizing the supply and demand of system resources, controlling input and output devices, operating the network, and managing the file system. The operating system is an indispensable part of an electronic device.

An operating system image can be a general term for all files of the operating system. During deployment of the operating system, the operating system image is usually obtained from the outside such as the Internet, and deployment of the operating system on the electronic device is completed by installing the operating system image.

A live CD image can refer to an operating system recovery image running on an optical disc. The live CD is an operating system (typically also including some other software) that is stored in advance on a removable storage device and that can be booted up in a non-hardware-specific manner, and does not need to be installed on a local external memory (e.g., a hard disk) of a computer. A medium used includes a compact disk read-only memory (CD-ROM, e.g., live CD), a digital versatile disc (DVD, e.g., live DVD), a flash disk (e.g., live Universal Serial Bus (USB)), a floppy disk, and the like. After exiting the live CD and rebooting, the computer can restore an original operating system. The live CD operates by "placing a file originally placed in a hard disk into a virtual disk of a memory". Therefore, a larger system memory indicates a higher execution speed.

Attaching can refer to a process in which the operating system enables computer files and directories on a storage device (such as a hard disk, a CD-ROM, or a shared resource) to be accessed by a user via the file system of the computer. In the Windows operating system, attaching typically refers to allocating a disk identifier to a disk partition (including a virtualized disk partition). In the Linux operating system, attaching refers to attaching a device (typically a storage device) to an existing directory.

This disclosure provides a method and apparatus for repairing a virtual machine in a cloud environment, an electronic device, a computer-readable storage medium, and a computer program product, intended to solve some technical problems of the related art.

The technical solutions in the embodiments of this disclosure and the technical effects produced by the technical solutions of this disclosure are illustrated through the following description of several embodiments. The following embodiments may refer to, draw from, or be combined with each other. Descriptions of identical terms, similar features, and similar implementation steps in different embodiments will not be repeated. The term, involved in the following description, "some embodiments" describes subsets of all possible embodiments, but "some embodiments" may be the same subset or different subsets of all the possible embodiments and may be combined with each other without conflict.

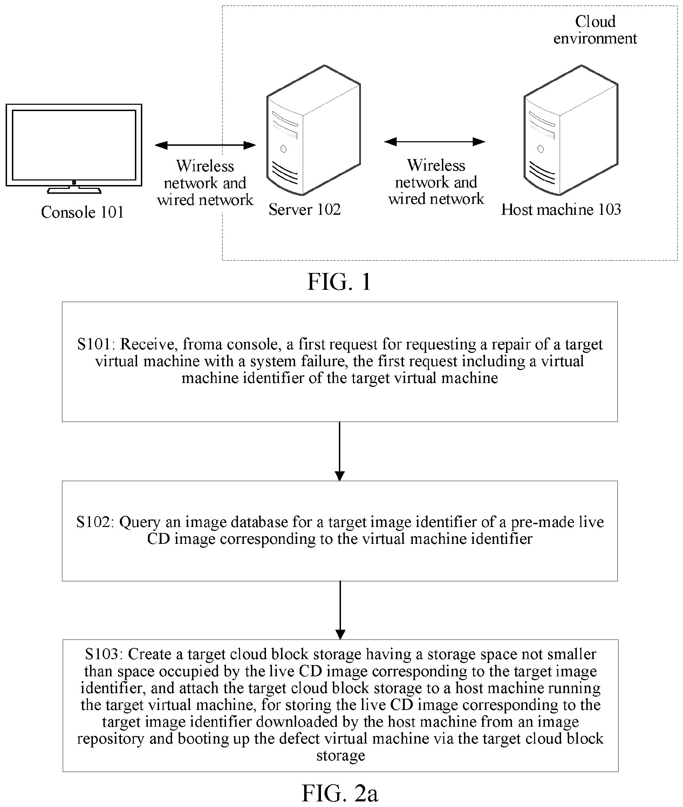

FIG. 1 illustrates a schematic diagram of a system structure of a method for repairing a virtual machine in a cloud environment according to an embodiment of this disclosure. As shown in FIG. 1, a console 101 includes a console operation interface provided in a cloud environment. A server 102 has a plurality of application programming interfaces (APIs). The console 101 is configured to transmit, to the server 102, a request instruction for requesting to repair a target virtual machine. The server 102 includes an access module and a scheduling module. The access module includes an API for receiving the request instruction from the console 101, and is configured to receive the request instruction from the console 101 and transfer the request instruction to the scheduling module. The scheduling module is configured to receive the request instruction transmitted by the access module, create a target cloud block storage according to the request instruction, attach the target cloud block storage to a host machine 103, and transmit the request instruction to the host machine 103 where the target virtual machine is located. The host machine 103 is configured to receive the request instruction transmitted by the scheduling module of the server 102, query for and modify a configuration file of the target virtual machine according to the request instruction, and finally boot up the target virtual machine via the target cloud block storage.

The console 101 and the server 102, and the server 102 and the host machine 103 may be connected via a communication network. In embodiments, the communication network may be a wired network or a wireless network.

In embodiments, the wireless network or the wired network uses a standard communication technology and/or protocol. The network is usually the Internet, but may alternatively be any network, including but not limited to a local area network (LAN), a metropolitan area network (MAN), a wide area network (WAN), a mobile, wired, or wireless network, or any combination of a dedicated network or a virtual dedicated network. In some embodiments, technologies and/or formats including hyper text mark-up language (HTML), extensible markup language (XML), and the like are utilized for representing data exchanged over the network. In addition, related encryption technologies such as a secure socket layer (SSL), transport layer security (TLS), a virtual private network (VPN), and Internet protocol security (IPsec) may be utilized for encrypting all or some links. In some other embodiments, customized and/or dedicated data communication technologies may be utilized alternatively or in addition to the above-mentioned data communication technologies.

An embodiment of this disclosure provides a method for repairing a virtual machine in a cloud environment. The method is applied to a server. As shown in FIG. 2a, the method includes operations S101, S102, and S103.

S101: Receive a first request transmitted by a console, the first request being configured for requesting to repair a target virtual machine with a system failure and including a virtual machine identifier of the target virtual machine.

In an embodiment of this disclosure, when a system failure occurs on the target virtual machine, to repair the target virtual machine (simply referred to as defect virtual machine), a white screen operation needs to be performed by the console. The white screen operation refers to performing an operation on a management page of the cloud environment via the console. The management page of the cloud environment is a visual web page. The management interface of the cloud environment includes a virtual machine option for entering a rescue mode. After the console selects the target virtual machine in the virtual machine option, the console transmits, to the server, the first request that includes the virtual machine identifier of the target virtual machine. The server receives the first request transmitted by the console, obtains the virtual machine identifier from the first request, and determines that the first request is configured for requesting to repair the target virtual machine corresponding to the virtual machine identifier.

In an embodiment of this disclosure, the server may include an access module that has an API for receiving the first request transmitted by the console. Therefore, in an embodiment of this disclosure, the first request transmitted by the console may be received via the API. In an embodiment of this disclosure, the access module is made up of a combination of relevant program codes, and these program codes run on the server.

S102: Query in an image database for a target image identifier of a pre-made live CD image corresponding to the virtual machine identifier.

In an embodiment of this disclosure, the live CD image is an operating system image that can be booted up via a cloud block storage, an optical disc, or a virtual hard disk. In an embodiment of this disclosure, a live CD image is pre-made, and an image identifier of the live CD image is created. A correspondence between the identifier of the live CD image and a virtual machine identifier is stored in the image database. In an embodiment of this disclosure, one image identifier may correspond to a plurality of virtual machine identifiers. In an embodiment of this disclosure, one live CD image may participate in the repairing processes of a plurality of virtual machines.

In an embodiment of this disclosure, a corresponding live CD image is set for the target virtual machine. After receiving the first request, the server obtains the virtual machine identifier in the first request, and may find the corresponding target image identifier in the image database according to the virtual machine identifier, such that the host machine subsequently obtains the live CD image from the image repository via the target image identifier. In an embodiment of this disclosure, a plurality of virtual machines may correspond to the same live CD image.

In some embodiments, the console may further specify the target image identifier in the first request. In this case, the server may directly receive the target image identifier, and does not need to query in the image database for the target image identifier.

In an embodiment of this disclosure, the image database may be a database special for storing a live CD image, or may be a database for storing all image identifiers in a cloud environment. This is not limited in this disclosure.

In an embodiment of this disclosure, after obtaining the target image identifier, the server sets the state of the target virtual machine to enter the rescue mode.

S103: Create, according to the target image identifier, a target cloud block storage for storing the live CD image corresponding to the target image identifier, and attach the target cloud block storage to a host machine where the target virtual machine is located, such that the host machine downloads the live CD image corresponding to the target image identifier from an image repository to the target cloud block storage, attaches the target cloud block storage to the target virtual machine, and boots up the target virtual machine via the target cloud block storage.

In an embodiment of this disclosure, after obtaining the target image identifier, the server applies for a target cloud block storage from a system cloud block storage in the cloud environment. The system cloud block storage creates the target cloud block storage for the server. The target cloud block storage is configured to store the live CD image corresponding to the target image identifier.

In an embodiment of this disclosure, after creating the target cloud block storage, the server attaches the target cloud block storage to the host machine where the target virtual machine is located (e.g., determines a host machine from which the target virtual machine is generated). Subsequently, the server attaches the target cloud block storage to the determined host machine, so that, after attaching the cloud block storage, the host machine can download a live CD image file corresponding to the target image identifier from the image repository to the target cloud block storage, attach the target cloud block storage to the target virtual machine, and then boot up the target virtual machine.

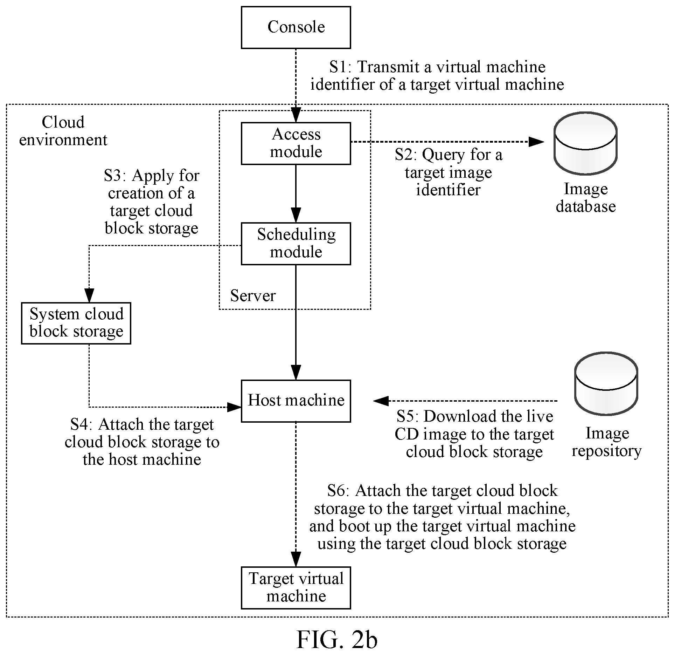

In an embodiment of this disclosure, the server includes a scheduling module, and thus may apply for the target cloud block storage via the scheduling module and then attach the target cloud block storage to the host machine. The scheduling module has an API for invoking a cloud block storage. In an embodiment of this disclosure, the scheduling module is made up of a combination of relevant program codes, and these program codes run on the server. FIG. 2b illustrates a flowchart of another method for repairing a virtual machine in a cloud environment according to an embodiment of this disclosure.

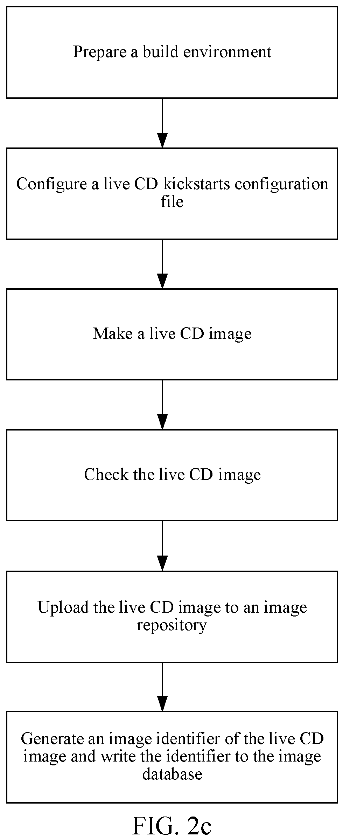

In an embodiment of this disclosure, before querying in the image database for the target image identifier, the method further includes: making a live CD image, storing the made live CD image to the image repository, and generating a corresponding target image identifier. Taking as an example that the operating system in the live CD image is centos7.x system, the process of making the live CD image includes: preparing a build environment, downloading the standard centos7.x system from the official website, installing on the centos7.x system the CD operating system tool livecd-tool kit with a command of "yum install-y livecd-tools", and simultaneously installing a third-party tool or program that may be used when the target virtual machine is repaired, thereby improving the capability of repairing the target virtual machine; downloading the boot-up plugin kickstart for the official centos7.x system, and modifying the plugin as required, so that a custom live CD image can be implemented; constructing the live CD image via the following command: "livecd-creator-v-config centos7livecd.cfg--cache/var/cache/livecd--name test-livecd", thereby generating the live CD image named "test-livecd" via the above command, and checking and testing this image; and after passing the test, storing the live CD image to the image repository, and generating the corresponding image identifier. For example, the image identifier "img202310010000.iso" is generated according to the date, and then stored to the image database. FIG. 2c illustrates a flowchart of making a live CD image according to an embodiment of this disclosure.

According to the embodiments of this disclosure: by receiving the first request transmitted by the console, the virtual machine identifier of the target virtual machine is obtained so as to determine the target virtual machine with a system failure. With the obtained virtual machine identifier, the target image identifier corresponding to the virtual machine identifier is found by querying in the image database according to the virtual machine identifier and the target image identifier, whereby the live CD image corresponding to the target virtual machine is determined. By creating the target cloud block storage with the target image identifier, a correspondence is established among the target image identifier, the live CD image, and the target cloud block storage, so that the target cloud block storage can meet the requirement for loading the live CD image, thereby preparing for the host machine to download the live CD image from the image repository to the target cloud block storage. The target cloud block storage is attached to the host machine, such that the host machine downloads the live CD image to the target cloud block storage. Moreover, the target cloud block storage in which the live CD image is loaded is attached to the target virtual machine, such that the target virtual machine with the system failure is booted up via the live CD image on the target cloud block storage, thereby booting up the target virtual machine with the system failure and enabling the repairing operation on the target virtual machine.

Based on the foregoing embodiments, in some embodiments, the target image identifier in the embodiments of this disclosure includes information for indicating an occupied space of the corresponding live CD image.

The operation of creating the target cloud block storage according to the target image identifier and attaching the target cloud block storage to the host machine where the target virtual machine is located includes the following operations.

S201: Determine the occupied space of the corresponding live CD image according to the target image identifier, and create the target cloud block storage having a storage space not smaller than the occupied space.

S202: Query in a host machine identifier list for a host machine identifier corresponding to the virtual machine identifier, the host machine identifier list including a correspondence between the virtual machine identifier and the host machine identifier.

S203. Attach the target cloud block storage to a host machine corresponding to the host machine identifier.

In an embodiment of this disclosure, the target image identifier includes the information indicative of the occupied space of the corresponding live CD image. Therefore, during the creation of a cloud block storage, the server creates, according to the occupied space of the corresponding live CD image as indicated in the target image identifier, the target cloud block storage having the storage space larger than or equal to the occupied space. It is avoided that the storage space of the cloud block storage is excessively small, so that the host machine cannot download the corresponding live CD image to the target cloud block storage subsequently.

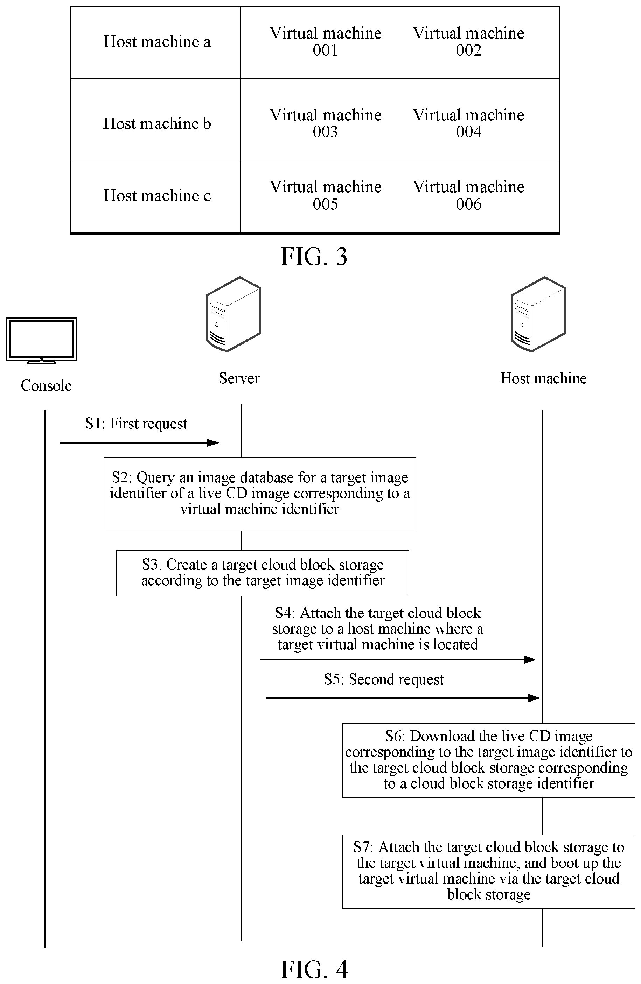

In an embodiment of this disclosure, after creating the target cloud block storage, the server attaches the target cloud block storage to the host machine where the virtual machine is located. In an embodiment of this disclosure, the host machine identifier list is preset. FIG. 3 illustrates a schematic diagram of a host machine identifier list according to an embodiment of this disclosure. In FIG. 3, a virtual machine 001 and a virtual machine 002 are generated by a host machine a by using a virtualization technology. If the identifier of the target virtual machine is 001, the corresponding host machine identifier may be determined according to the host machine identifier list, whereby the host machine where the target virtual machine is located is determined. The server may obtain, from the list, a host machine from which the target virtual machine is generated. The host machine identifier list includes the correspondence between the virtual machine identifier of the target virtual machine and the host machine identifier corresponding to the target virtual machine. Therefore, the server obtains the host machine identifier according to the virtual machine identifier, thereby determining the host machine where the target virtual machine is located.

In an embodiment of this disclosure, after determining the host machine identifier, the server attaches the cloud block storage to the host machine. In an embodiment of this disclosure, the cloud block storage may be attached to the host machine via the Internet Small Computer System Interface (iSCSI) protocol. A remote cloud block storage may be attached to the host machine via the iSCSI protocol, enabling data sharing and access. The host machine may access, via the iSCSI protocol, the target cloud block storage like accessing a local disk.

Based on the foregoing embodiments, in some embodiments, during the creation of the target cloud block storage according to the occupied space of the corresponding live CD image as indicated in the target image identifier in the embodiments of this disclosure, the cloud block storage identifier of the target cloud block storage is also created.

Further, after attaching the target cloud block storage to the host machine corresponding to the host machine identifier, the method further includes the operation of:

transmitting a second request to the host machine, the second request being configured for requesting the host machine to download the live CD image corresponding to the target image identifier to the target cloud block storage corresponding to the cloud block storage identifier, attach the target cloud block storage to the target virtual machine, and boot up the target virtual machine via the target cloud block storage.

The second request includes the virtual machine identifier, the target image identifier, and the cloud block storage identifier of the target cloud block storage.

In an embodiment of this disclosure, when the server applies for the target cloud block storage from the system cloud block storage, the system cloud block storage also creates the corresponding cloud block storage identifier for the target cloud block storage while creating the target cloud block storage for the server. When performing an operation on a cloud block storage, the server needs to execute an instruction corresponding to the cloud block storage, and the instruction has to include the corresponding cloud block storage identifier, so that the server can understand a cloud block storage on which it performs the operation. Therefore, in an embodiment of this disclosure, when the target cloud block storage is created, the corresponding cloud block storage identifier is created for the target cloud block storage at the same time. After the cloud block storage identifier of the target cloud block storage is created, the virtual machine identifier of the target virtual machine and the corresponding cloud block storage identifier are stored to a cloud block storage database. The cloud block storage database stores correspondences between virtual machine identifiers and cloud block storage identifiers.

FIG. 4 illustrates a flowchart of another method for repairing a virtual machine in a cloud environment according to an embodiment of this disclosure. Though operation S101, operation S102, and operation S103, the server receives the first request transmitted by the console, queries in the image database for the target image identifier of the live CD image corresponding to the virtual machine identifier, and creates the target cloud block storage according to the target image identifier. Afterwards, the server attaches the target cloud block storage to the corresponding host machine. In this case, the server transmits, to the host machine, the second request that includes the virtual machine identifier, the target image identifier, and the cloud block storage identifier. The host machine downloads the live CD image to the target cloud block storage according to the target image identifier and the cloud block storage identifier. The host machine attaches the target cloud block storage to the target virtual machine, and boots up the target virtual machine via the target cloud block storage.

Information such as the virtual machine identifier, the target image identifier, and the cloud block storage identifier that are obtained by the server is transferred to the host machine, so that, after obtaining such information, the host machine can download the live CD image corresponding to the target image identifier to the target cloud block storage corresponding to the cloud block storage identifier, attach the target cloud block storage to the target virtual machine corresponding to the virtual machine identifier, and boot up the target virtual machine via the target cloud block storage.

Based on the foregoing embodiments, in an embodiment, before querying in the image database for the target image identifier of the live CD image corresponding to the virtual machine identifier, the method further includes the following operations.

S401: Determine whether the target virtual machine is in a first state, the first state being a shutdown state or an operating state.

S402: Determine whether a complexity of a boot-up password for the target virtual machine meets a preset condition if determining that the target virtual machine is in the first state, the boot-up password for the target virtual machine being set by the console when transmitting the first request.

S403: Query in the image database for the target image identifier of the live CD image corresponding to the virtual machine identifier of the target virtual machine if determining that the complexity of the boot-up password for the target virtual machine meets the preset condition.

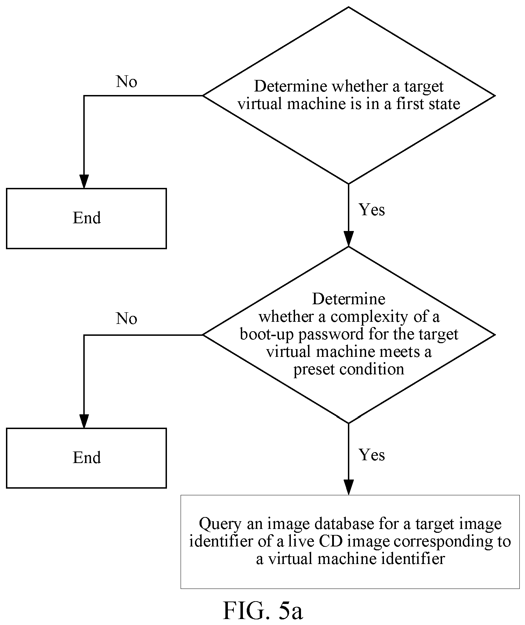

FIG. 5a illustrates a flowchart of detecting a target virtual machine according to an embodiment of this disclosure. In an embodiment of this disclosure, before receiving the virtual machine identifier transmitted by the console and querying, in the image database according to the virtual machine identifier, for the image identifier corresponding to the live CD image that corresponds to the virtual machine identifier, the server needs to determine the first state of the target virtual machine corresponding to the virtual machine identifier. The first state includes the shutdown state and the operating state. A related repairing operation can be performed on the target virtual machine when the state of the target virtual machine is the first state. When the target virtual machine is in a state other than the first state, there may be a subtask. Therefore, the rescue mode cannot be activated, and hence the related repairing operation cannot be performed.

In an embodiment of this disclosure, after determining that the target virtual machine is in the first state, the server further determines whether the complexity of the boot-up password for the target virtual machine meets the preset condition. When the console transmits the first request to the server, the boot-up password is set for the target virtual machine. To ensure the security of the process of repairing the target virtual machine, the server will verify the complexity of the boot-up password. If the complexity of the boot-up password is relatively low, the boot-up password is excessively simple, and the target virtual machine is easy to receive an illegal attack. Consequently, the security of the repairing process cannot be ensured.

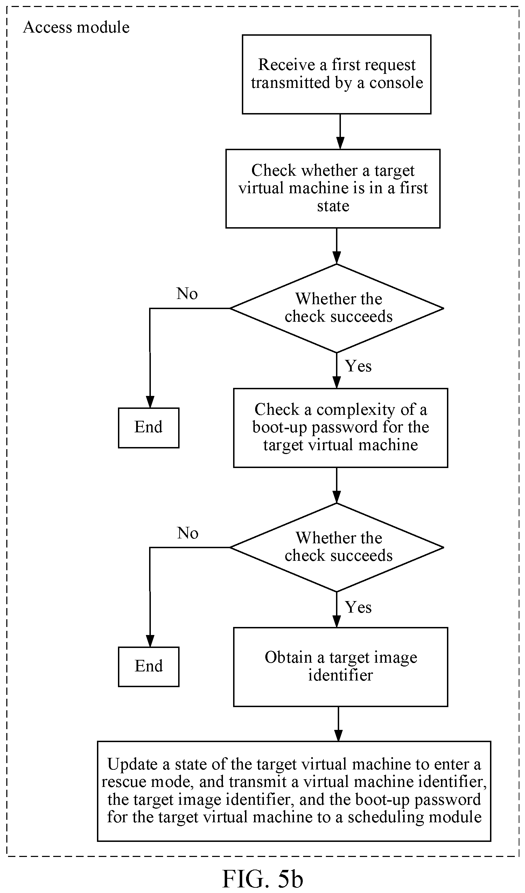

In an embodiment of this disclosure, the server includes an access module, and operation S401 to operation S403 are performed by the access module. FIG. 5b illustrates a flowchart of an execution process of an access module in a method for repairing a virtual machine in a cloud environment according to an embodiment of this disclosure. In an embodiment of this disclosure, the access module is configured to receive the first request transmitted by the console, determine the state of the target virtual machine, check the complexity of the boot-up password for the target virtual machine, obtain the target image identifier corresponding to the virtual machine identifier, update the state of the target virtual machine to the rescue mode, and transmit the virtual machine identifier, the target image identifier, and the boot-up password for the target virtual machine to the scheduling module.

According to the embodiments of this disclosure, before querying for the target image identifier corresponding to the virtual machine identifier, the server determines the state of the target virtual machine, thereby avoiding that when the target virtual machine runs the subtask, the repairing operation is performed on the target virtual machine, affecting running of the subtask. In addition, the complexity of the boot-up password for the target virtual machine is verified, preventing the boot-up password from being relatively low. Therefore, during the repair of the target virtual machine, the target virtual machine can be protected from being attacked by an illegal program, thereby ensuring the security of the repairing process.

Based on the foregoing embodiments, in some embodiments, after determining whether the complexity of the boot-up password for the target virtual machine meets the preset condition, the method further includes the operation of:
transmitting information indicating that the target virtual machine fails to enter the rescue mode to the console for instructing the console to reset the boot-up password for the target virtual machine, if the complexity of the boot-up password for the target virtual machine does not meet the preset condition.

In an embodiment of this disclosure, when the complexity of the boot-up password for the target virtual machine does not meet the preset condition, the complexity of the boot-up password is relatively low. The boot-up password for the target virtual machine set by the console is relatively simple. Therefore, the server transmits the information indicating that the target virtual machine fails to enter the rescue mode to the console. The server cannot continue to perform the operation of repairing the virtual machine, and provides a notification to the console to reset the boot-up password for the target virtual machine.

According to the embodiments of this disclosure, when the complexity of the boot-up password for the target virtual machine does not meet the preset condition, this can be fed back to the console in time, such that the console resets the boot-up password in time, thereby avoiding that the repairing operation cannot be performed on the target virtual machine in time due to the relatively low complexity of the boot-up password.

Based on the foregoing embodiments, in some implementations, after attaching the target cloud block storage to the host machine where the target virtual machine is located, the method further includes the following operations.

S601: Receive a third request transmitted by the console, the third request being configured for requesting to stop repairing the target virtual machine and including the virtual machine identifier of the target virtual machine.

S602: Query in a host machine identifier list for a host machine identifier corresponding to the virtual machine identifier, and transmit a fourth request to the host machine according to the host machine identifier, such that a host machine corresponding to the host machine identifier detaches the target cloud block storage attached to the target virtual machine, and transmits the cloud block storage identifier to the server, the fourth request including the virtual machine identifier and the cloud block storage identifier.

S603: Receive the cloud block storage identifier transmitted by the host machine, and delete the live CD image from the target cloud block storage according to the cloud block storage identifier.

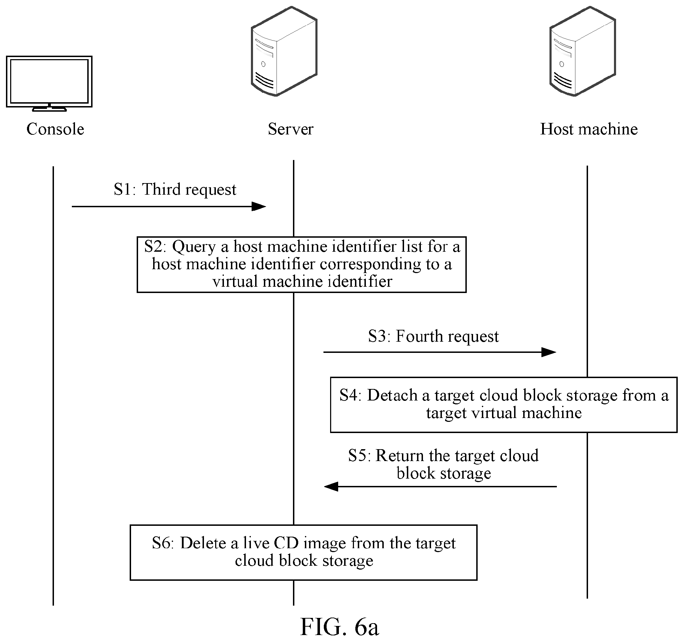

FIG. 6a illustrates a flowchart of stopping repairing a target virtual machine according to an embodiment of this disclosure. In this embodiment, after attaching the target cloud block storage to the host machine where the target virtual machine is located, the server receives the third request transmitted by the console, the third request including the virtual machine identifier of the target virtual machine and being configured for requesting the server to exit the target virtual machine from the rescue mode according to the virtual machine identifier (e.g., stop repairing the target virtual machine).

In an embodiment of this disclosure, after receiving the virtual machine identifier, the server first determines a state of the target virtual machine corresponding to the virtual machine identifier. If the target virtual machine is in the rescue mode (e.g., the target virtual machine is in the repairing process), the server queries in the host machine identifier list for the host machine identifier corresponding to the virtual machine identifier, and finds the host machine where the target virtual machine corresponding to the virtual machine identifier is located (e.g., determines the host machine from which the target virtual machine is generated virtually). Then, the cloud block storage identifier is determined via the virtual machine identifier. The server queries in the cloud block storage database for the cloud block storage identifier corresponding to the virtual machine identifier, and after determining the host machine identifier and the cloud block storage identifier, transmits the fourth request to the host machine corresponding to the host machine identifier. The fourth request includes the virtual machine identifier and the cloud block storage identifier, such that the host machine determines the target virtual machine according to the virtual machine identifier, and detaches the target cloud block storage previously attached to the target virtual machine.

In an embodiment of this disclosure, after transmitting the fourth request to the host machine, the server receives the cloud block storage identifier returned by the host machine, so that the server can delete content from the target cloud block storage (e.g., delete the live CD image from the target cloud block storage), and return the target cloud block storage to the system cloud block storage after clearing the content in the target cloud block storage.

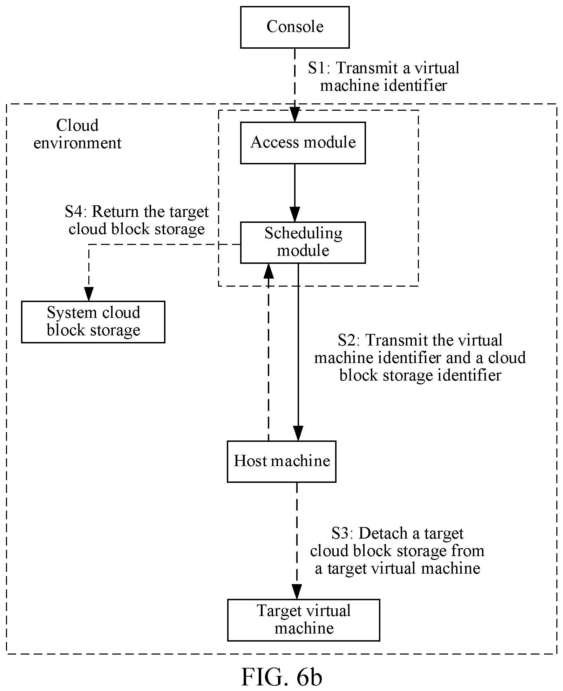

FIG. 6b illustrates another flowchart of stopping repairing a target virtual machine according to an embodiment of this disclosure. In an embodiment of this disclosure, the server includes an access module and a scheduling module. The access module is configured to receive the virtual machine identifier of the target virtual machine transmitted by the console, and transfer the virtual machine identifier to the scheduling module. The scheduling module is configured to obtain the cloud block storage identifier from the cloud block storage database according to the virtual machine identifier, and transmit the virtual machine identifier and the cloud block storage identifier to the host machine, such that the host machine detaches the target cloud block storage from the target virtual machine. The scheduling module is further configured to receive the cloud block storage identifier returned by the host machine, delete the live CD image from the target cloud block storage, and return the target cloud block storage to the system cloud block storage.

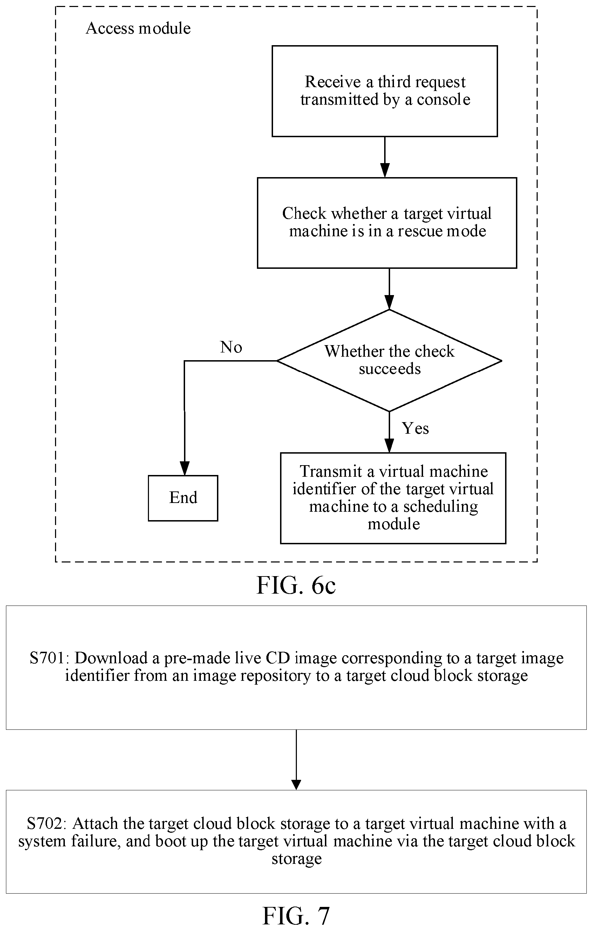

FIG. 6c illustrates a flowchart of an execution process of an access module when stopping repairing a target virtual machine according to an embodiment of this disclosure. The access module is configured to receive the third request transmitted by the console, check whether the target virtual machine is in the rescue mode, and after passing the check, transmit the virtual machine identifier of the target virtual machine to the scheduling module.

According to the embodiments of this disclosure, the target virtual machine is exited from the rescue mode. The repairing operation on the target virtual machine is ended. The third request from the console is received, and the virtual machine identifier is obtained. The host machine corresponding to the target virtual machine is determined according to the virtual machine identifier, and the fourth request is transmitted to the host machine, such that the host machine detaches the target cloud block storage from the target virtual machine and receives the cloud block storage identifier of the target cloud block storage returned by the host machine. Thus, the content in the target cloud block storage is cleared, and the target cloud block storage is returned to the system cloud block storage.

An embodiment of this disclosure provides a method for repairing a virtual machine in a cloud environment. The method is applied to a host machine. As shown in FIG. 7, the method includes operation S701 and operation S702.

S701: Download a live CD image corresponding to a target image identifier from an image repository to a target cloud block storage.

In an embodiment of this disclosure, the target cloud block storage is created by a server according to the target image identifier, and is attached to the host machine. The target image identifier is obtained by the server via querying in an image database according to the virtual machine identifier of the target virtual machine. The virtual machine identifier of the target virtual machine is carried in a first request that is transmitted by a console to the server and configured for requesting to repair the target virtual machine with a system failure. The host machine downloads the live CD image corresponding to the target image identifier from the image repository to the target cloud block storage according to the target image identifier. The target cloud block storage is attached to the host machine. The host machine may manage the target cloud block storage like managing a hard disk thereof and realize downloading of the live CD image to the target cloud block storage. In this case, the target cloud block storage is attached to the host machine. The server remotely attaches the target cloud block storage to the host machine via the iSCSI protocol, thereby achieving data sharing and access.

In an embodiment of this disclosure, the live CD image in the image repository is made by the server and stored to the image repository. Moreover, the target image identifier is generated and stored to the image database.

S702: Attach the target cloud block storage to the target virtual machine, and boot up, via the target cloud block storage, the target virtual machine with a system failure.

In an embodiment of this disclosure, after downloading the live CD image corresponding to the target image identifier to the target cloud block storage, the host machine attaches the target cloud block storage to the target virtual machine corresponding to the virtual machine identifier. The console transmits the virtual machine identifier to the server, and then the server transmits the virtual machine identifier to the host machine. The host machine determines, according to the virtual machine identifier, the target virtual machine that needs to be repaired, and then attaches the target cloud block storage in which the live CD image is loaded to the target virtual machine.

After the target cloud block storage is attached to the target virtual machine, the target cloud block storage is used as a boot-up disk for booting up the target virtual machine, and the target virtual machine is booted up based on the target cloud block storage. After the target virtual machine is booted up, the related repairing operation may be performed for the system failure of the target virtual machine. Before the target cloud block storage is attached to the target virtual machine, the target virtual machine has its own system disk, and after a failure occurs on the system disk, the target virtual machine cannot be booted up. According to the embodiments of this disclosure, when the target cloud block storage is used as the boot-up disk, the system disk of the target virtual machine is used as an ordinary hard disk of the target virtual machine. After the virtual machine is booted up by the target cloud block storage, the related repairing operation may be performed on the system disk of the target virtual machine.

According to the embodiments of this disclosure, the live CD image corresponding to the target image identifier is downloaded to the target cloud block storage, such that the boot-up disk that can boot up the target virtual machine with the system failure is constructed. The target cloud block storage in which the live CD image is loaded is attached to the target virtual machine, so that the target cloud block storage can boot up the target virtual machine. Thus, the problem that the target virtual machine cannot be booted up due to the system failure is solved, and repairing of the target virtual machine with the system failure is achieved.

Based on the foregoing embodiments, in some implementations, before downloading the live CD image corresponding to the target image identifier from the image repository to the target cloud block storage, the method further includes the operation of:
receiving a second request transmitted by the server, the second request being configured for requesting the host machine to download the live CD image corresponding to the target image identifier to the target cloud block storage corresponding to the cloud block storage identifier, attach the target cloud block storage to the target virtual machine, and boot up the target virtual machine via the target cloud block storage.

The second request includes the virtual machine identifier, the target image identifier, and the cloud block storage identifier of the target cloud block storage.

In an embodiment of this disclosure, before downloading the live CD image from the image repository to the target cloud block storage, the host machine receives the second request transmitted by the server. The second request includes the virtual machine identifier, the target image identifier, and the cloud block storage identifier. The host machine includes an agent component that can receive the second request transmitted by the server. The agent component on the host machine is an agent software module running on the host machine, and is configured to manage and execute a particular task.

The virtual machine identifier is transmitted by the console to the server, and is the virtual machine identifier of the target virtual machine with a system failure. The target image identifier is the target image identifier corresponding to the virtual machine identifier that is obtained by the server via querying in the image database according to the virtual machine identifier. The target image identifier corresponds to one live CD image. The cloud block storage identifier is the cloud block storage identifier of the target cloud block storage for loading the live CD image.

According to the embodiments of this disclosure, the second request transmitted by the server is received, and the virtual machine identifier, the target image identifier, and the cloud block storage identifier are obtained, such that the host machine downloads the live CD image to the target cloud block storage according to the three identifiers, attaches the target cloud block storage to the target virtual machine, and boots up the target virtual machine based on the target cloud block storage. The virtual machine identifier, the target image identifier, and the cloud block storage identifier have a correspondence previously in this disclosure, and a systematic method is provided for booting up the target virtual machine with the system failure.

Based on the foregoing embodiments, in some implementations, before downloading the live CD image corresponding to the target image identifier from the image repository to the target cloud block storage, the method further includes the following operations.

S901: Determine whether the target cloud block storage has been attached to the host machine according to the cloud block storage identifier.

S902: Search in the image repository for the live CD image corresponding to the target image identifier if determining that the target cloud block storage has been attached.

S903: Download the live CD image to the target cloud block storage.

In an embodiment of this disclosure, before the host machine downloads the live CD image to the target cloud block storage, the method further includes: checking whether the target cloud block storage is attached to the host machine. The host machine queries, according to the cloud block storage identifier, whether the target cloud block storage is attached thereto.

If determining that the target cloud block storage is attached to the host machine, the host machine downloads the live CD image corresponding to the target image identifier from the image repository to the target cloud block storage. In an embodiment of this disclosure, when checking whether the target cloud block storage is attached, the host machine obtains a storage address of the target cloud block storage, and downloads the live CD image to the target cloud block storage according to the storage address.

According to the embodiments of this disclosure, during downloading of the live CD image to the target cloud block storage, the host machine checks whether the target cloud block storage is attached. Considering a case in which the server may mistakenly attach the target cloud block storage to the host machine, it is ensured that after the target cloud block storage is attached to the host machine, the live CD image is downloaded from the image repository to the target cloud block storage, thereby preventing a failure to download the live CD image.

Based on the foregoing embodiments, in some embodiments, the operation of attaching the target cloud block storage to the target virtual machine and booting up, via the target cloud block storage, the target virtual machine with the system failure includes the following operations.

S1001: Shut down the target virtual machine if determining that the target virtual machine is in an operating state.

S1002. Obtain a configuration file of the target virtual machine according to the virtual machine identifier, and add the cloud block storage identifier to the configuration file such that the target cloud block storage is attached to the target virtual machine.

S1003. Set, in the configuration file, a priority of the target cloud block storage to a highest priority among priorities of boot-up hard disks for booting up the target virtual machine, the boot-up hard disks being hard disks having a function of booting up the target virtual machine.

S1004. Boot up the target virtual machine via the target cloud block storage.

In an embodiment of this disclosure, when attaching the target cloud block storage to the target virtual machine, the host machine first determines the state of the target virtual machine. The host machine determines, according to the virtual machine identifier, the target virtual machine with a system failure, and determines the state of the target virtual machine in this case. Before transmitting the third request to the host machine, the server determines that the state of the target virtual machine is the first state. The first state is a shutdown state or an operating state. In this case, the host machine determines the state of the target virtual machine again. If the state of the target virtual machine is the operating state, the host machine shuts down the target virtual machine.

In an embodiment of this disclosure, the host machine shuts down the target virtual machine by invoking the libvirt API, a virtualization interface. The libvirt API is a toolkit for managing virtualization platforms, providing stable, secure, and scalable interfaces for managing the virtualization platforms (including virtual machines, storage, and networks). It can be configured to perform various virtualized management tasks, such as creating, booting up, stopping, and managing virtual machines, managing storage volumes and network interfaces, and configuring virtualized hosts.

In an embodiment of this disclosure, after shutting down the target virtual machine, the host machine obtains the configuration file of the target virtual machine according to the virtual machine identifier. The xml configuration file of the target virtual machine is obtained by invoking the libvirt API again. The xml configuration file of the target virtual machine is modified based on the agent component on the host machine.

In an embodiment of this disclosure, two modifications are made to the xml configuration file of the target virtual machine. The first modification is configured for attaching the target cloud block storage to the target virtual machine, and the modification process includes: newly adding the target cloud block storage identifier under the devices label of xml. The second modification is configured for setting the priority of the target cloud block storage for booting up the target virtual machine to the highest priority among the priorities of the cloud block storages for booting up the target virtual machines, and the modification process includes: setting the boot-up order of the target cloud block storage in the xml configuration file to 1, and setting the boot-up order of the system disk of the target virtual machine to 9.

The embodiments of this disclosure are intended to boot up the target virtual machine based on the target cloud block storage. However, before this, the boot-up disk of the target virtual machine is the system disk of the target virtual machine. In an embodiment of this disclosure, the priority of the target cloud block storage for booting up the target virtual machine is set to the highest priority, such that the target virtual machine is no longer booted up by the system disk. In this case, the system disk is used as the ordinary hard disk of the target virtual machine. Finally, the host machine invokes the libvirt API to boot up the target virtual machine.

According to the embodiments of this disclosure, the xml configuration file of the target virtual machine is modified, and the target cloud block storage is attached to the target virtual machine, such that the target virtual machine is booted up based on the live CD image on the target cloud block storage.

Based on the foregoing embodiments, in an embodiment, the operation of booting up the target virtual machine via the target cloud block storage includes the following operations.

S1101: Inject a user name and a boot-up password for the target virtual machine to the live CD image.

S1102: Boot up the target virtual machine, the user name and the boot-up password for the target virtual machine being carried in the second request transmitted by the server.

In an embodiment of this disclosure, the target virtual machine is booted up based on the target cloud block storage. The user name and the boot-up password corresponding to the target virtual machine are injected to the live CD image on the target cloud block storage via the cloud server initialization tool cloudinit. The user name and the boot-up password are carried in the second request transmitted by the server to the host machine, and are also carried in the first request transmitted by the console to the server. The user name and the boot-up password are injected to the live CD image via cloudinit, and the libvirt API is invoked to boot up the target virtual machine.

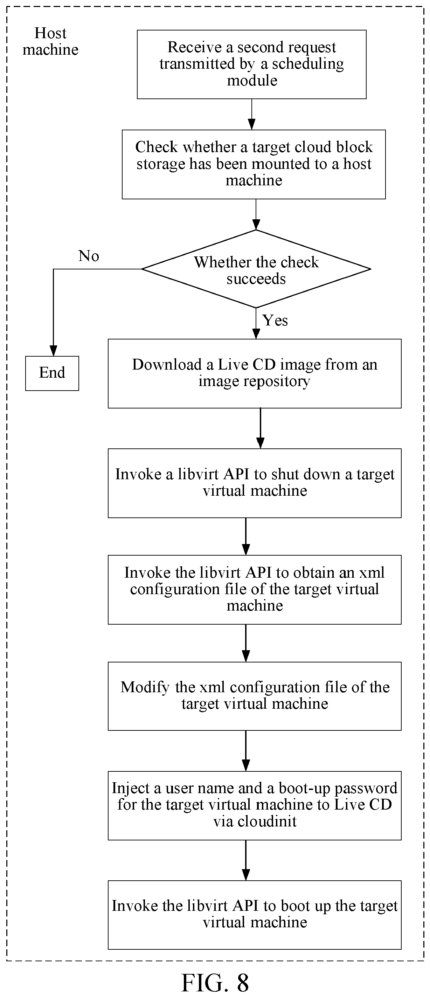

After the target virtual machine is booted up, the user may input the user name and the password into the target virtual machine. The server authenticates the user name and the boot-up password that are inputted by the user. If the user name and the boot-up password that are inputted by the user are the same as the user name and the password that are injected to the live CD image, the authentication succeeds. In this case, the user may perform the specific repairing operation on the target virtual machine. In some examples, FIG. 8 illustrates a flowchart of another method for repairing a virtual machine in a cloud environment according to an embodiment of this disclosure. When the method for repairing a virtual machine in a cloud environment is applied to a host machine, the host machine receives a second request transmitted by a scheduling module of a server, checks whether a target cloud block storage is attached to the host machine, and after passing the check, downloads a live CD image from an image repository to the target cloud block storage. The libvirt API is invoked to shut down a target virtual machine. The libvirt API is invoked to obtain the xml configuration file of the target virtual machine and modify the xml configuration file. A user name and a boot-up password for the target virtual machine are injected to the live CD image via the cloudinit component. Finally, the libvirt API is invoked to boot up the target virtual machine.

Based on the foregoing embodiments, in some embodiments, after booting up the target virtual machine via the target cloud block storage, the method further includes the following operations.

S1201: Receive a fourth request transmitted by the server, the fourth request being configured for requesting the host machine to detach the target cloud block storage from the target virtual machine and including the virtual machine identifier and the cloud block storage identifier, and the virtual machine identifier being carried in a third request transmitted by a console to the server.

S1202. Detach the target cloud block storage from the target virtual machine according to the virtual machine identifier and the cloud block storage identifier.

S1203. Transmit the cloud block storage identifier to the server such that the server deletes the live CD image from the target cloud block storage.

In an embodiment of this disclosure, the host machine receives the fourth request transmitted by the server. The fourth request includes the virtual machine identifier and the cloud block storage identifier. The agent component of the host machine can receive the fourth request, and obtain the virtual machine identifier and the cloud block storage identifier in the fourth request. The virtual machine identifier is carried in the third request transmitted by the console to the server. The cloud block storage identifier is obtained by the server according to the correspondence between the virtual machine identifier and the cloud block storage identifier in the cloud block storage database. The fourth request is configured for requesting the host machine to exit the target virtual machine from the rescue mode and return the target cloud block storage.

In an embodiment of this disclosure, after obtaining the virtual machine identifier, the host machine determines the target virtual machine, determines the target cloud block storage corresponding to the cloud block storage identifier, and detaches the target cloud block storage from the target virtual machine.

In an embodiment of this disclosure, after detaching the target cloud block storage, the host machine returns the target cloud block storage, and transmits the cloud block storage identifier to the server, so that the server can clear the live CD image in the detached target cloud block storage and return the target cloud block storage to the system cloud block storage.

According to the embodiments of this disclosure, the target virtual machine is exited from the rescue mode. The repairing operation on the target virtual machine is ended. Therefore, the embodiments of this disclosure implement the systematic process of repairing the target virtual machine.

Based on the foregoing embodiments, in some implementations, the operation of detaching the target cloud block storage from the target virtual machine according to the virtual machine identifier and the cloud block storage identifier includes the following operations.

S1301: Shut down the target virtual machine corresponding to the virtual machine identifier.

S1302. Obtain the configuration file of the target virtual machine, delete the cloud block storage identifier from the configuration file such that the host machine detaches the target cloud block storage from the target virtual machine, and restore the priorities of the boot-up hard disks for booting up the target virtual machine in the configuration file.

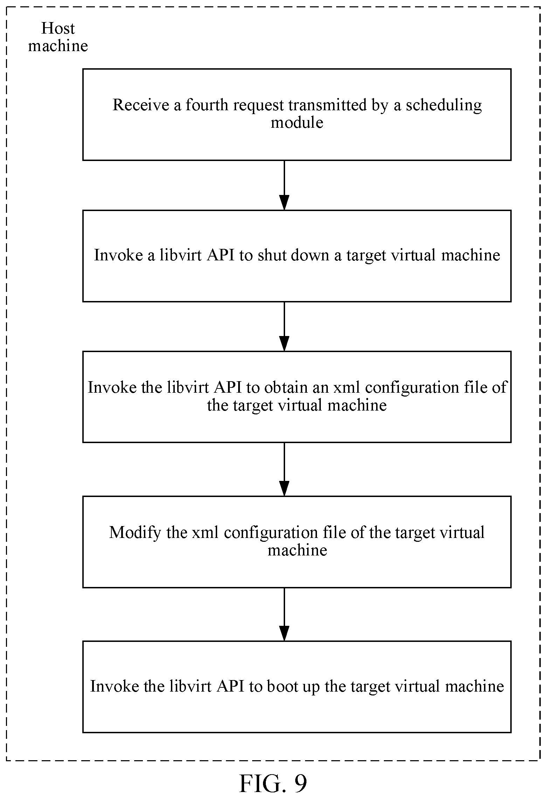

FIG. 9 illustrates a flowchart of stopping repairing a target virtual machine according to an embodiment of this disclosure. In an embodiment of this disclosure, after receiving the fourth request, the host machine invokes the libvirt API to shut down the target virtual machine, and then obtains the xml configuration file of the target virtual machine by invoking the libvirt API. After obtaining the xml configuration file of the target virtual machine, the host machine modifies the configuration file according to the cloud block storage identifier. Two modifications are made. The first modification is to delete, according to the cloud block storage identifier, a disk label corresponding to the target cloud block storage, to detach the target cloud block storage from the target virtual machine. The second modification is to set the boot-up order of the system disk of the target virtual machine to 1, to restore the boot-up order of the system disk of the target virtual machine.

After the xml configuration file of the target virtual machine is modified, the host machine may invoke the libvirt API here to boot up the target virtual machine. In this case, the target virtual machine is booted up via the system disk.

According to the embodiments of this disclosure, the xml configuration file of the target virtual machine is modified again, such that the target cloud block storage is detached from the target virtual machine, and the boot-up order of the system disk of the target virtual machine is restored, so that the repaired target virtual machine can be booted up according to the system disk.

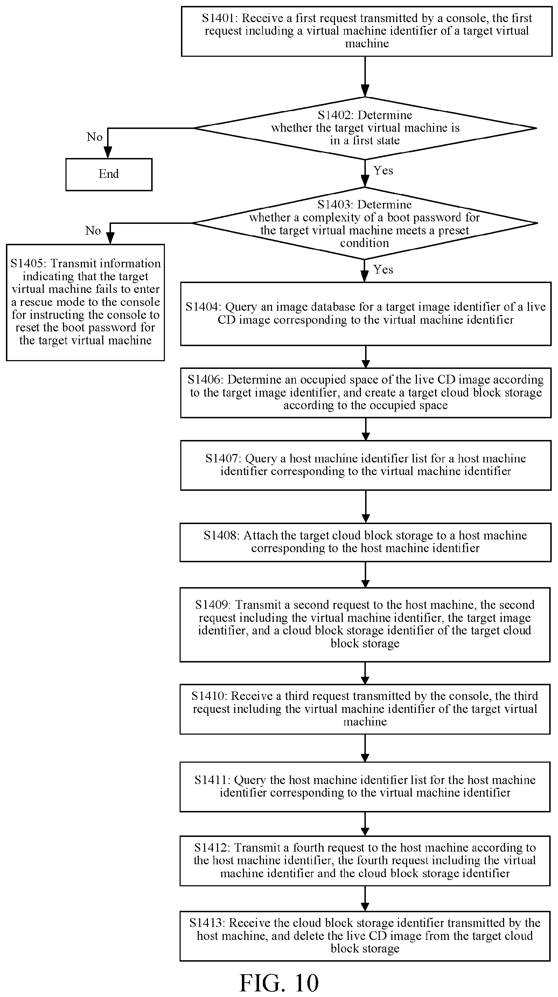

FIG. 10 illustrates a flowchart of another method for repairing a virtual machine in a cloud environment according to an embodiment of this disclosure. The method for repairing a virtual machine in a cloud environment provided in the embodiments of this disclosure is applied to a server in the cloud environment. The method includes the following operations.

S1401: Receive a first request transmitted by a console, the first request including a virtual machine identifier of a target virtual machine.

S1402: Determine whether the target virtual machine is in a first state.

S1403. Determine whether a complexity of a boot-up password for the target virtual machine meets a preset condition if determining that the target virtual machine is in the first state.

S1404. Query in an image database for a target image identifier of a live CD image corresponding to the virtual machine identifier if determining that the complexity of the boot-up password for the target virtual machine meets the preset condition.

S1405: Transmit information indicating that the target virtual machine fails to enter a rescue mode to the console for instructing the console to reset the boot-up password for the target virtual machine, if the complexity of the boot-up password for the target virtual machine does not meet the preset condition.

S1406: Determine an occupied space of the live CD image according to the target image identifier, and create a target cloud block storage according to the occupied space.

S1407: Query in a host machine identifier list for a host machine identifier corresponding to the virtual machine identifier.

S1408: Attach the target cloud block storage to a host machine corresponding to the host machine identifier.

S1409: Transmit a second request to the host machine, the second request including the virtual machine identifier, the target image identifier, and the cloud block storage identifier of the target cloud block storage.

S1410: Receive a third request transmitted by the console, the third request including the virtual machine identifier of the target virtual machine.

S1411: Query in the host machine identifier list for the host machine identifier corresponding to the virtual machine identifier.

S1412: Transmit a fourth request to the host machine according to the host machine identifier, the fourth request including the virtual machine identifier and the cloud block storage identifier.

S1413. Receive the cloud block storage identifier transmitted by the host machine, and delete the live CD image from the target cloud block storage.

Operations S1401 to S1405 and operation S1410 are performed by the access module of the server, and operations S1406 to S1409 and operations S1411 to S1413 are performed by the scheduling module of the server.

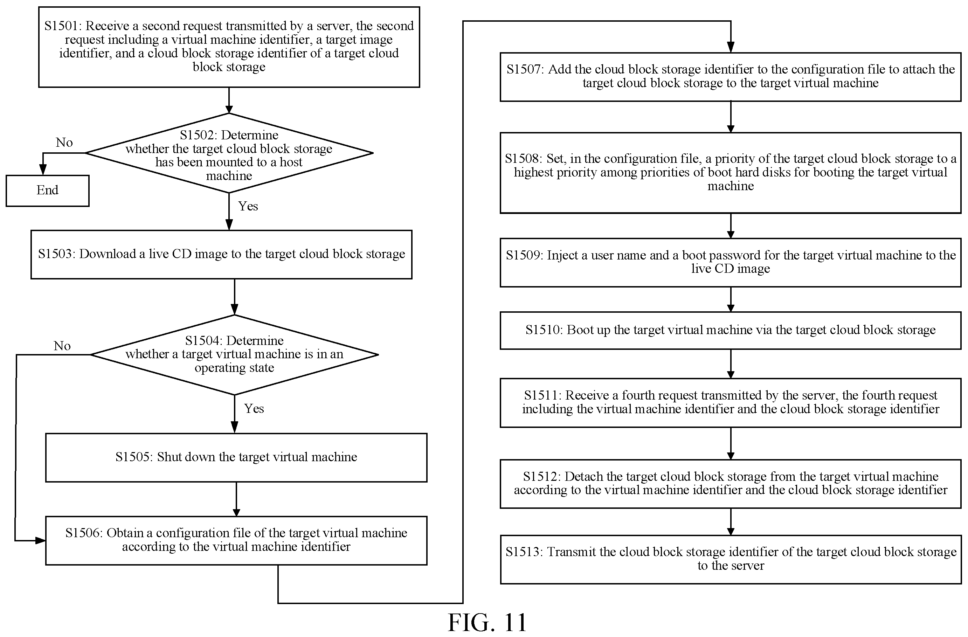

FIG. 11 illustrates a flowchart of another method for repairing a virtual machine in a cloud environment according to an embodiment of this disclosure. As shown in FIG. 11, the method for repairing a virtual machine in a cloud environment provided in the embodiment of this disclosure is applied to a host machine where a target virtual machine is located. The method includes the following operations.

S1501: Receive a second request transmitted by a server, the second request including a virtual machine identifier, a target image identifier, and a cloud block storage identifier of a target cloud block storage.

S1502: Determine whether the target cloud block storage has been attached to the host machine.

S1503: Download a live CD image to the target cloud block storage if determining that the target cloud block storage has been attached.

S1504: Determine whether the target virtual machine is in an operating state.

S1505: Shut down the target virtual machine if determining that the target virtual machine is in the operating state.

S1506: Obtain a configuration file of the target virtual machine according to the virtual machine identifier.

S1507: Add the cloud block storage identifier to the configuration file such that the target cloud block storage is attached to the target virtual machine.

S1508: Set, in the configuration file, a priority of the target cloud block storage to a highest priority among priorities of boot-up hard disks for booting up the target virtual machine.

S1509: Inject a user name and a boot-up password for the target virtual machine to the live CD image.

S1510: Boot up the target virtual machine via the target cloud block storage.

S1511: Receive a fourth request transmitted by the server, the fourth request including the virtual machine identifier and the cloud block storage identifier.

S1512: Detach the target cloud block storage from the target virtual machine according to the virtual machine identifier and the cloud block storage identifier.

S1513: Transmit the cloud block storage identifier of the target cloud block storage to the server.

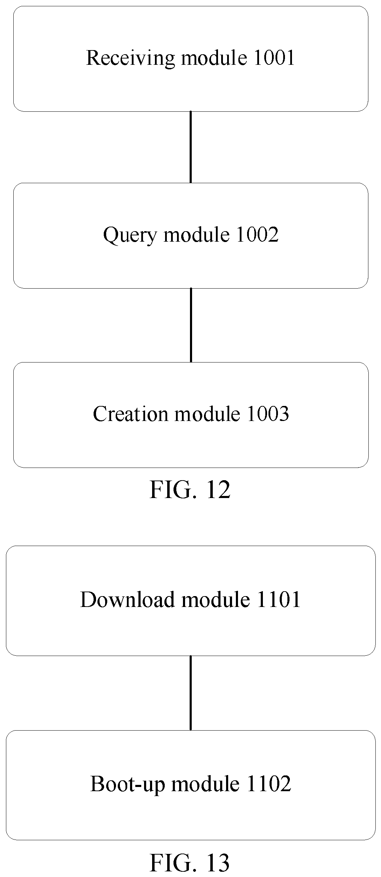

An embodiment of this disclosure provides an apparatus for repairing a virtual machine in a cloud environment. As shown in FIG. 12, the apparatus for repairing a virtual machine in a cloud environment may include a receiving module 1001, a query module 1002, and a creation module 1003.

The receiving module 1001 is configured to receive a first request transmitted by a console, the first request being configured for requesting to repair a target virtual machine with a system failure and including a virtual machine identifier of the target virtual machine.

The query module 1002 is configured to query in an image database for a target image identifier of a pre-made live CD image corresponding to the virtual machine identifier.

The creation module 1003 is configured to create, according to the target image identifier, a target cloud block storage for storing the live CD image corresponding to the target image identifier, and attach the target cloud block storage to a host machine where the target virtual machine is located, such that the host machine downloads the live CD image corresponding to the target image identifier from an image repository to the target cloud block storage, attaches the target cloud block storage to the target virtual machine, and boots up the target virtual machine via the target cloud block storage.

An embodiment of this disclosure provides an apparatus for repairing a virtual machine in a cloud environment. As shown in FIG. 13, the apparatus for repairing a virtual machine in a cloud environment may include a download module 1101 and a boot-up module 1102.

The download module 1101 is configured to download a live CD image corresponding to a target image identifier from an image repository to a target cloud block storage.

The boot-up module 1102 is configured to attach the target cloud block storage to a target virtual machine, and boot up, via the target cloud block storage, the target virtual machine with a system failure.

The target cloud block storage is created by a server to store the live CD image corresponding to the target image identifier and is attached to the host machine. The target image identifier is obtained by the server via querying in an image database according to a virtual machine identifier of the target virtual machine. The virtual machine identifier of the target virtual machine is carried in a first request that is transmitted by a console to the server and configured for requesting to repair the target virtual machine.

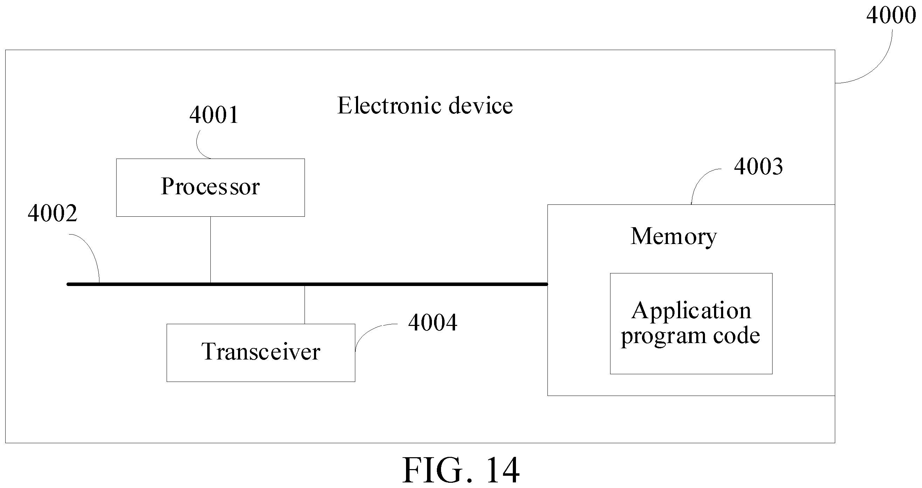

In an embodiment, an electronic device is provided. As shown in FIG. 14, the electronic device 4000 includes a processor 4001 and a memory 4003. The processor 4001 is connected to the memory 4003, e.g., via a bus 4002. In some embodiments, the electronic device 4000 may further include a transceiver 4004. The transceiver 4004 may be configured for data interaction between the electronic device and another electronic device, such as data transmission and/or data reception. In practical use, the number of transceivers 4004 is not limited to one, and the structure of the electronic device 4000 does not constitute a limitation to the embodiments of this disclosure.

The processor 4001 may be a central processing unit (CPU), a general-purpose processor, a digital signal processor (DSP), an application specific integrated circuit (ASIC), a field programmable gate array (FPGA), or another programmable logic device, a transistor logic device, a hardware component, or any combination thereof. The processor is capable of implementing or performing various logical blocks, modules, and circuits described in connection with the disclosure of this disclosure. The processor 4001 may alternatively be a combination of processors for implementing a computing function, for example, a combination including one or more microprocessors or a combination of a DSP and a microprocessor.

The bus 4002 may include a channel for transferring information between the aforementioned components. The bus 4002 may be a peripheral component interconnect (PCI) bus, an extended industry standard architecture (EISA) bus, or the like. The bus 4002 may be classified as an address bus, a data bus, a control bus, and the like. For ease of representation, one thick line is used to represent the communications bus in FIG. 14, but this does not mean that there is one bus or one type of bus.

The memory 4003 may be a read-only memory (ROM), another type of static storage device that can store static information and instructions, a random access memory (RAM), or another type of dynamic storage device that can store information and instructions. It may be an electrically erasable programmable read-only memory (EEPROM), a compact disc read-only memory (CD-ROM), another optical disc storage, an optical disc storage (including a compact disc, a laser disc, an optical disc, a digital versatile disc, a Blue ray disc, etc.), a disk storage medium, another magnetic storage device, or any other medium that can be configured to carry or store a computer program and is readable by a computer. This is not limited herein.

The memory 4003 is configured to store a computer program for performing an embodiment of this disclosure, and is controlled and executed by the processor 4001. The processor 4001 is configured to execute the computer program stored on the memory 4003 to implement the operations shown in the foregoing method embodiments.

The electronic device may include, but be not limited to, mobile terminals such as a mobile phone, a notebook computer, a digital streaming receiver, a personal digital assistant (PDA), a portable Android device (PAD), a portable media player (PMP), and a vehicular terminal (e.g., a vehicular navigation terminal), and fixed terminals such as a digital TV and a desktop computer. The electronic device shown in FIG. 14 is an example, and is not to impose any limitation on functions and usage scope of the embodiments of this disclosure.

An embodiment of this disclosure provides a computer-readable storage medium, having a computer program stored thereon, the computer program, when executed by a processor, implementing the operations and corresponding content of the foregoing method embodiments. Compared with the related art, this disclosure achieves the following: by receiving the first request transmitted by the console, the virtual machine identifier of the target virtual machine is obtained so as to determine the target virtual machine with a system failure. With the obtained virtual machine identifier, the target image identifier corresponding to the virtual machine identifier is found by querying in the image database according to the virtual machine identifier and the target image identifier, whereby the live CD image corresponding to the target virtual machine is determined. By creating the target cloud block storage with the target image identifier, a correspondence is established among the target image identifier, the live CD image, and the target cloud block storage, so that the target cloud block storage can meet the requirement for loading the live CD image, thereby preparing for the host machine to download the live CD image from the image repository to the target cloud block storage. The target cloud block storage is attached to the host machine, such that the host machine downloads the live CD image to the target cloud block storage. Moreover, the target cloud block storage in which the live CD image is loaded is attached to the target virtual machine, such that the target virtual machine with the system failure is booted up via the live CD image on the target cloud block storage, thereby booting up the target virtual machine with the system failure and enabling the repairing operation on the target virtual machine.

The computer-readable medium described above in this application may be a computer-readable signal medium or a computer-readable medium or any combination thereof. The computer-readable storage medium may be, for example (but is not limited to) an electric, magnetic, optical, electromagnetic, infrared, or semi-conductive system, apparatus, or device, or any combination of the above. More specific examples of the computer-readable storage medium may include, but not be limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof. In this application, the computer-readable storage medium may be any tangible medium that contains or stores a program, and the program may be used by or in combination with an instruction execution system, apparatus, or device. In this application, the computer-readable signal medium may include a data signal that propagates in a baseband or as a part of a carrier and carries thereon a computer-readable program code. The data signal propagating in such a manner may take a plurality of forms, including, but not limited to, an electromagnetic signal, an optical signal, or any appropriate combination thereof. The computer-readable signal medium may alternatively be any other computer-readable medium than the computer-readable storage medium. The computer-readable storage medium may send, propagate or transmit a program used by or in combination with an instruction execution system, apparatus or device. The program code included on the computer-readable medium may be transmitted by using any suitable medium, including, but not limited to, an electric wire, a fiber-optic cable, radio frequency (RF) and the like, or any appropriate combination thereof.

An embodiment of this application further provides a computer program product, including a computer program, the computer program, when executed by a processor, implementing the operations and corresponding content of the foregoing method embodiments. Compared with the related art, this application achieves the following: by receiving the first request transmitted by the console, the virtual machine identifier of the target virtual machine is obtained so as to determine the target virtual machine with a system failure. With the obtained virtual machine identifier, the target image identifier corresponding to the virtual machine identifier is found by querying in the image database according to the virtual machine identifier and the target image identifier, whereby the live CD image corresponding to the target virtual machine is determined. By creating the target cloud block storage with the target image identifier, a correspondence is established among the target image identifier, the live CD image, and the target cloud block storage, so that the target cloud block storage can meet the requirement for loading the live CD image, thereby preparing for the host machine to download the live CD image from the image repository to the target cloud block storage. The target cloud block storage is attached to the host machine, such that the host machine downloads the live CD image to the target cloud block storage. Moreover, the target cloud block storage in which the live CD image is loaded is attached to the target virtual machine, such that the target virtual machine with the system failure is booted up via the live CD image on the target cloud block storage, thereby booting up the target virtual machine with the system failure and enabling the repairing operation on the target virtual machine.

In the specification, claims, and accompanying drawings of this disclosure, the terms "first", "second", "third", "fourth", "1", "2", and the like (if any) are intended to distinguish between similar objects, but do not necessarily indicate a specific order or sequence. Data used in such a way is interchangeable in a proper case, so that the embodiments of this disclosure described herein can be implemented in a sequence other than the sequence illustrated or described herein.

Although operation steps are indicated by arrows in the flowcharts of the embodiments of this disclosure, an implementation sequence of these steps is not limited to the sequence indicated by the arrows. Unless otherwise described herein, in some implementation scenarios of the embodiments of this disclosure, the implementation steps in the flowcharts may be performed in other sequences according to requirements. In addition, some or all of the steps in the flowcharts may include a plurality of sub-steps or a plurality of stages based on an actual implementation scenario. Some or all of these sub-steps or stages may be performed at the same moment, and each of these sub-steps or stages may be separately performed at different moments. In a scenario in which execution moments are different, the sequence of performing these sub-steps or stages may be flexibly configured according to requirements. This is not limited in the embodiments of this disclosure.

The features described in connection with any one of the embodiments disclosed herein may be combined with features of any other embodiment, where such combination is technically compatible and consistent with the overall technical concept of the present invention. In particular, technical features from different embodiments that serve the same or similar technical purpose may be freely selected and combined with each other to form further embodiments.

The foregoing descriptions are merely exemplary implementations of some implementation scenarios of this application. A person of ordinary skill in the art may use other similar implementation means based on the technical idea of this application without departing from the technical concept of the solutions of this application. This also falls within the protection scope of the embodiments of this application.

In conclusion, the scope of the claims is not limited to the implementations in the examples described above, but the specification is to be considered as a whole and a broadest interpretation is to be given.

## Claims

1. A method for repairing a virtual machine in a cloud environment, performed by a server having a communication connection with a host machine running at least one virtual machine, the method comprising:
receiving, from a console, a first request for requesting a repair of a defect virtual machine having a system failure among the at least one virtual machine, the first request comprising a virtual machine identifier of the defect virtual machine;
querying an image database for a target image identifier of a pre-made live compact disc, CD, image corresponding to the virtual machine identifier;
creating a target cloud block storage having a storage space not smaller than space occupied by the live CD image corresponding to the target image identifier; and
attaching the target cloud block storage to a host machine running the defect virtual machine, for storing the live CD image corresponding to the target image identifier downloaded by the host machine from an image repository and booting up the defect virtual machine via the target cloud block storage.

2. The method according to claim 1, wherein the target image identifier indicates an occupied space of the live CD image;
wherein creating the target cloud block storage and attaching the target cloud block storage to the host machine corresponding to the defect virtual machine comprises:
determining the occupied space of the live CD image according to the target image identifier; and
creating the target cloud block storage having a storage space not smaller than the occupied space;
querying a host machine identifier list for a host machine identifier corresponding to the virtual machine identifier, the host machine identifier list comprising correspondence relationships between virtual machine identifiers and host machine identifiers; and
attaching the target cloud block storage to the host machine corresponding to the host machine identifier.

3. The method according to claim 1 or 2, further comprising:
creating a cloud block storage identifier of the target cloud block storage;
wherein attaching the target cloud block storage to the host machine comprises:
transmitting a second request to the host machine for requesting the host machine to download the live CD image associated with the target image identifier to the target cloud block storage corresponding to the cloud block storage identifier and attach the target cloud block storage to the defect virtual machine to boot up the defect virtual machine via the target cloud block storage, the second request comprising the virtual machine identifier, the target image identifier, and the cloud block storage identifier of the target cloud block storage.

4. The method according to claim 1, wherein querying the image database comprises:
determining whether the defect virtual machine is in a first state before querying the image database for the target image identifier of the live CD image corresponding to the virtual machine identifier, the first state being one of a shutdown state or an operating state;
determining whether a complexity of a boot-up password of the defect virtual machine satisfies a preset condition in response to a determination that the defect virtual machine is in the first state, the boot-up password of the defect virtual machine being set by the console when transmitting the first request; and
querying the image database for the target image identifier of the live CD image corresponding to the virtual machine identifier in response to a determination that the complexity of the boot-up password of the defect virtual machine satisfies the preset condition.

5. The method according to claim 4, further comprising:
in response to a determination that the complexity of the boot-up password does not satisfy the preset condition, transmitting to the console feedback information indicating that the defect virtual machine fails to enter a rescue mode and instructing the console to reset the boot-up password for the defect virtual machine.

6. The method according to claim 3, further comprising:
receiving a third request transmitted by the console for requesting to stop repairing the defect virtual machine, the third request comprising the virtual machine identifier of the defect virtual machine;
querying a host machine identifier list for a host machine identifier corresponding to the virtual machine identifier; and
transmitting a fourth request to the host machine corresponding to the host machine identifier for instructing the host machine to detach the target cloud block storage from the defect virtual machine and transmit the target cloud block storage identifier to the server, the fourth request comprising the virtual machine identifier and the cloud block storage identifier;
receiving the cloud block storage identifier transmitted by the host machine; and
deleting the live CD image from the target cloud block storage corresponding to the cloud block storage identifier.

7. A method for repairing a virtual machine in a cloud environment, performed by a host machine running at least one virtual machine, the method comprising:
downloading a pre-made live compact disc, CD, image corresponding to a target image identifier from an image repository to a target cloud block storage;
attaching the target cloud block storage to a defect virtual machine among the at least one virtual machine; and
booting up the defect virtual machine via the target cloud block storage;
wherein the target cloud block storage is created by a server for storing the live CD image to be attached to the host machine;
the target image identifier is obtained by the server by querying an image database using a virtual machine identifier of the defect virtual machine which is included in a first request that is transmitted by a console to the server for requesting a repair of the defect virtual machine.

8. The method according to claim 7, wherein downloading the live CD image comprises:
downloading the live CD image in response to receiving from the server a second request for requesting the host machine to download the live CD image corresponding to the target image identifier to the target cloud block storage corresponding to a cloud block storage identifier and attach the target cloud block storage to the defect virtual machine for booting up the defect virtual machine via the target cloud block storage,
the second request comprises comprising the virtual machine identifier, the target image identifier, and the cloud block storage identifier of the target cloud block storage.

9. The method according to claim 8, wherein downloading the live CD image further comprises:
checking whether the target cloud block storage corresponding to the cloud block storage identifier has been attached to the host machine before downloading the live CD image corresponding to the target image identifier from the image repository to the target cloud block storage;
searching in the image repository for the live CD image corresponding to the target image identifier in response to a determination that the target cloud block storage has been attached to the host machine; and
downloading the live CD image to the target cloud block storage.

10. The method according to claim 9, wherein attaching the target cloud block storage to the defect virtual machine and booting up the defect virtual machine via the target cloud block storage comprises:
shutting down the defect virtual machine in response to a determination that the defect virtual machine is in an operating state;
obtaining a configuration file of the defect virtual machine using the virtual machine identifier, and adding the cloud block storage identifier into the configuration file to attach the target cloud block storage to the defect virtual machine;
setting, in the configuration file, a highest priority to the target cloud block storage among boot-up disks for booting up the defect virtual machine, the boot-up disks being capable of booting up the defect virtual machine; and
booting up the defect virtual machine via the target cloud block storage.

11. The method according to claim 10, wherein booting up the defect virtual machine via the target cloud block storage comprises:
injecting a user name and a boot-up password of the defect virtual machine into the live CD image, the user name and the boot-up password being included in the second request; and
booting up the defect virtual machine.

12. The method according to claim 10, further comprising:
receiving from the server a fourth request for requesting the host machine to detach the target cloud block storage from the defect virtual machine, the fourth request comprising the virtual machine identifier and the cloud block storage identifier;
detaching the target cloud block storage corresponding to the cloud block storage identifier from the defect virtual machine corresponding to the virtual machine identifier; and
transmitting the cloud block storage identifier to the server instructing the server to delete the live CD image from the target cloud block storage.

13. The method according to claim 12, wherein detaching the target cloud block storage corresponding to the cloud block storage identifier from the defect virtual machine corresponding to the virtual machine identifier comprises:
shutting down the defect virtual machine corresponding to the virtual machine identifier;
obtaining the configuration file of the defect virtual machine;
deleting the cloud block storage identifier from the configuration file to detach the target cloud block storage corresponding to the cloud block storage identifier from the defect virtual machine; and
restoring priorities of boot-up disks for booting up the defect virtual machine in the configuration file.

14. An apparatus for repairing a virtual machine in a cloud environment, comprising:
a receiving module, configured to receive, from a console, a first request for requesting a repair of a defect virtual machine having a system failure, the first request comprising a virtual machine identifier of the defect virtual machine;
a query module, configured to query an image database for a target image identifier of a pre-made live compact disc, CD, image corresponding to the virtual machine identifier;
a creation module, configured to create a target cloud block storage having a storage space not smaller than space occupied by the live CD image corresponding to the target image identifier, and attach the target cloud block storage to a host machine running the defect virtual machine, for storing the live CD image corresponding to the target image identifier downloaded by the host machine from an image repository and booting up the defect virtual machine via the target cloud block storage.

15. An apparatus for repairing a virtual machine in a cloud environment, comprising:
a download module, configured to download a pre-made live compact disc, CD, image corresponding to a target image identifier from an image repository to a target cloud block storage; and
a boot-up module, configured to attach the target cloud block storage to a defect virtual machine having a system failure, and boot up the defect virtual machine via the target cloud block storage,
wherein the target cloud block storage is created by a server for storing the live CD image to be attached to the host machine;
the target image identifier is obtained by the server by querying an image database using a virtual machine identifier of the defect virtual machine which is included in a first request that is transmitted by a controller to the server for requesting a repair of the defect virtual machine.

16. An electronic device, comprising a processor and a memory storing a computer program executable by the processor to implement the method according to any one of claims 1 to 13.

17. A computer-readable storage medium, storing a computer program executable by a processor to implement the method according to any one of claims 1 to 13.

18. A computer program product, comprising a computer program executable by a processor to implementing the method according to any one of claims 1 to 13.
